# EUROPÄISCHE PATENTSCHRIFT

(11) **EP 3 824 176 B1**
(45) Veröffentlichungstag und Bekanntmachung des Hinweises auf die Patenterteilung: **25.12.2024**
(21) Anmeldenummer: 19742352.8
(22) Anmeldetag: 18.07.2019
(51) Int. Cl.: F03D 1/06

(54) **ROTORBLATT FÜR EINE WINDENERGIEANLAGE UND WINDENERGIEANLAGE**
ROTOR BLADE FOR A WIND TURBINE AND WIND TURBINE
PALE DE ROTOR POUR ÉOLIENNE ET ÉOLIENNE

(30) Priorität: 18.07.2018 DE 102018117398
(43) Veröffentlichungstag der Anmeldung: 26.05.2021
(73) Patentinhaber: Wobben Properties GmbH, 26607 Aurich (DE)
(72) Erfinder: MESSING, Ralf, 26605 Aurich (DE); STEMBERG, Jochen, 26607 Aurich (DE)
(74) Vertreter: Eisenführ Speiser
(86) Internationale Anmeldenummer: PCT/EP2019/069351
(87) Internationale Veröffentlichungsnummer: WO 2020/016351

(56) Entgegenhaltungen:
- EP-A1- 2 548 801
- EP-A1- 3 348 824
- US-A1- 2014 328 693
- US-A1- 2015 204 306

## Beschreibung

Die vorliegende Erfindung betrifft ein Rotorblatt für eine Windenergieanlage. Außerdem betrifft die vorliegende Erfindung eine Windenergieanlage und ein Verfahren zum Optimieren einer Windenergieanlage.

Rotorblätter für einen Rotor einer Windenergieanlage sind allgemein bekannt. Solche Rotorblätter weisen ein Profil (Querschnittsprofil) auf, welches den besonderen aerodynamischen Anforderungen Rechnung trägt.

Um die aerodynamischen Eigenschaften von Rotorblättern zu beeinflussen, ist es bekannt, auf dem Querschnittsprofil der Rotorblätter Wirbelgeneratoren vorzusehen, welche mehrere senkrecht zur Oberfläche verlaufende Verwirbelungselemente umfassen. Die Wirbelgeneratoren, die auch unter dem Begriff Vortex-Generatoren bekannt sind, dienen dazu, über der Oberfläche des Rotortblattes lokale Regionen turbulenter Luftströmungen zu erzeugen, um eine Erhöhung der Resistenz gegen Strömungsablösungen zu bewirken. Hierzu verwirbeln Wirbelgeneratoren die wandnahe Strömung am Rotorblatt, in dessen Folge sich der Impulsaustausch zwischen wandnahen und wandfernen Strömungsschichten stark erhöht und die Strömungsgeschwindigkeiten in der wandnahen Grenzschicht zunehmen. Aufgrund der erhöhten wandnahen Geschwindigkeiten ist die Strömung in der Lage, über eine längere Laufstrecke auf der Rotorblattoberfläche Druckanstiege zu überwinden.

Aus der EP 3 309 388 A1 sind ein Rotorblatt und eine Windenergieanlage der eingangs genannten Art bekannt. Die EP 3 309 388 A1 beschreibt ein Rotorblatt mit einer Saugseite und einer Druckseite für eine Windenergieanlage, welches eine Rotorblattwurzel eines Nabenbereichs zur Anbindung des Rotorblattes an eine Rotornabe, und eine zur Rotorblattwurzel abgewandten Seite eines Spitzenbereichs angeordneten Rotorblattspitze aufweist. Das Rotorblatt weist ein Querschnittsprofil auf, auf welchem in Längsrichtung des Rotorblattes abschnittsweise mehrere baugleiche Wirbelgeneratoren nebeneinander angeordnet sind. Die Wirbelgeneratoren umfassen paarweise nebeneinander angeordnete Verwirbelungselemente mit einer Länge und einer Höhe. Die Verwirbelungselemente sind jeweils unter einem Winkel zu einer Hauptströmungsrichtung des Rotorblattes orientiert, wobei die unter einem gleichen Winkel angeordneten Verwirbelungselemente einen konstanten seitlichen Abstand zueinander aufweisen.

Rotorblätter für Windenergieanlagen mit Wirbelgeneratoren bzw. Verwirbelungselementen sind auch aus US 2014/0328692 A1, US 2014/0328693 A1, US 9,869,297 B2 und WO 2010/033018 A2 bekannt.

Auf solchen Blattabschnitten mit Wirbelgeneratoren weist das Rotorblatt typischerweise deutlich höhere Grenzanstellwinkel auf, bei denen an der Hinterkante erstmalig Strömungsablösung auftritt, als an Blattabschnitten, wo auf Wirbelgeneratoren verzichtet wird. Zwangsläufig verursachen die Wirbelgeneratoren durch ihre Wirkungsweise größere Reibungswiderstände an der Profiloberfläche des Rotorblattes, d.h. der Widerstandsbeiwert des Querschnittsprofils nimmt deutlich zu und damit nimmt die Gleitzahl, das Verhältnis von Auftriebsbeiwert zu Widerstandsbeiwert, möglicherweise sogar ab. Die Zunahme des Widerstandsbeiwertes bzw. die Abnahme der Gleitzahl wirkt sich schädlich auf den Anlagenertrag aus. So nimmt der Einfluss der Gleitzahl bzw. des Widerstandsbeiwertes auf die Leistung von der Rotorblattwurzel zum Rotorblattspitze immer weiter zu. Umso weiter man sich von der Rotorblattwurzel in Richtung der Rotorspitze entfernt auf dem Rotorblatt befindet, desto bedeutender sind niedrige Widerstandsbeiwerte bzw. hohe Gleitzahlen für die Leistung und den Ertrag der Anlage. Darüber hinaus können die Wirbelgeneratoren zu einer erhöhten Schallemission beitragen.

Der Erfindung liegt die Aufgabe zugrunde, vorstehend genanntes Problem zu beheben oder zumindest zu verringern, insbesondere ein Rotorblatt anzugeben, welches sich im Nabenbereich durch das Abfangen hoher Schwankungen des Anstellwinkels und im Spitzenbereich durch hohe Gleitzahlen auszeichnet.

Bezüglich des Rotortblattes wird die Aufgabe durch ein Rotorblatt gemäß dem Anspruch 1 gelöst. Die Erfindung führt auch auf eine Windenergieanlage nach Anspruch 8 und ein Verfahren zum Optimieren einer Windenergieanlage gemäß Anspruch 9.

Gemäß dem Anspruch 1 ist ein Rotorblatt mit einer Saugseite und einer Druckseite für eine Windenergieanlage vorgesehen, wobei das Rotorblatt eine Rotorblattwurzel eines Nabenbereichs zur Anbindung des Rotorblattes an eine Rotornabe, eine Rotorblattspitze, die an einer zur Rotorblattwurzel abgewandten Seite eines Spitzenbereichs angeordnet ist, zumindest einen Wirbelgenerator, der zwischen der Rotorblattwurzel und der Rotorblattspitze angeordnet ist, wobei der zumindest eine Wirbelgenerator in Längsrichtung des Rotorblattes nebeneinander angeordnete Verwirbelungselemente mit einer Länge und einer Höhe umfasst, die jeweils unter einem Winkel zu einer Hauptströmungsrichtung des Rotorblattes orientiert sind. Die Verwirbelungselemente weisen in Längsrichtung des Rotorblattes einen seitlichen Abstand zueinander auf. In Abhängigkeit von einer jeweiligen Distanz der Anordnung der Verwirbelungselemente zur Rotorblattwurzel erfolgt eine Variation der Geometrie der Verwirbelungselemente.

Die Erfindung geht von der Überlegung aus, dass eine Windenergieanlage nicht in einem stationären Betriebspunkt betrieben werden kann, sondern unterschiedlichen Einflüssen unterworfen ist, die zu einer fortlaufenden Änderung des aerodynamischen Betriebspunktes führen. Anstellwinkel, die über das Querschnittsprofil des Rotorblattes vorliegen, variieren im Betrieb der Windenergieanlage permanent. Einfluss auf die Anstellwinkelverteilung haben insbesondere Parameter wie Anströmturbulenz, horizontale und vertikale Scherung der Bodengrenzschicht und die Luftdichte. Dabei sind die Auswirkungen der Änderungen dieser Parameter über das Rotorblatt gesehen ungleichmäßig. Kleinskalige Anströmturbulenz und Änderungen der Luftdichte beispielsweise haben eine Absenkung der Schnelllaufzahl zur Folge, was wiederum dazu führt, dass der Anstellwinkel im Nabenbereich stärker variiert als im Spitzenbereich.

Um bei einem Einsatz von passiven Strömungsmaßnahmen, wie es die Anordnung von Wirbelgeneratoren darstellt, den Aufwand und die Komplexität der Strömungsbeeinflussungsmaßnahme gegenüber dem Stand der Technik zu erhöhen, ist in Abhängigkeit von einer jeweiligen Distanz der Anordnung der Verwirbelungselemente zur Rotorblattwurzel eine Variation der Geometrie der Verwirbelungselemente vorgesehen. Die Anpassung der Geometrie der Verwirbelungselemente in Abhängigkeit von ihrer Beabstandung zur Rotorblattwurzel ermöglicht eine vorteilhafte Anpassung an die jeweils in den Rotorabschnitten zwischen dem Nabenbereich und dem Spitzenbereich herrschenden Randbedingungen an dem Rotorblatt. Durch eine distanzabhängige Veränderung der Geometrie der Verwirbelungselemente lassen sich unterschiedliche Auftriebsbeiwerte und Gleitzahlen darstellen. Diese insbesondere durch Modifikation der Abmessungen der Verwirbelungselemente des Wirbelgenerators erzielten Eigenschaften der Profilbeiwerte tragen exakt den Anforderungen am Rotorblatt Rechnung.

Erfindungsgemäß sind die Verwirbelungselemente paarweise mit jeweils im Wesentlichen entgegengesetzt ausgebildetem Winkel zu der Hauptströmungsrichtung des Rotorblattes orientiert, wobei der seitliche Abstand zwischen nebeneinander angeordneten Verwirbelungselementen mit im Wesentlichen gleichem Winkel bestimmt wird. Die paarweise Anordnung von Verwirbelungselementen sorgt für eine besonders effektive Wirbelerzeugung insbesondere dafür, dass gegenläufig rotierende Wirbel nebeneinander erzeugt werden.

Vorzugsweise kann sich die Variation der Geometrie der Verwirbelungselemente aus einem Verhältnis von seitlichem Abstand zur Länge des Verwirbelungselementes ergeben, wobei das Verhältnis als eine Funktion der Distanz bestimmbar ist. Durch eine Vergrößerung des Verhältnisses mit zunehmendem Abstand zur Rotorwurzel, hier durch eine Reduzierung der Länge oder eine Erhöhung des Abstands identisch orientierter Verwirbelungselemente, verringern sich die maximal erreichbaren Anstellwinkel zugunsten verbesserter Gleitzahlen. Bei einem kleinen Verhältnis von seitlichem Abstand zur Länge des Verwirbelungselementes sind im Nabenbereich hohe maximale Anstellwinkel zulässig.

Weiterhin kann sich die Variation der Geometrie der Verwirbelungselemente aus einem Verhältnis von seitlichem Abstand zur Höhe ergeben, welches ebenfalls als eine Funktion der Distanz bestimmbar ist. Entsprechend können durch eine Veränderung des Verhältnisses in Abhängigkeit vom Abstand zur Rotorwurzel, hier durch eine Veränderung der Höhe der Verwirbelungselemente oder eine Variation des Abstands identisch orientierter Verwirbelungselemente, die maximal erreichbaren Anstellwinkel zugunsten verbesserter Gleitzahlen angepasst werden.

Das relativ kleine Verhältnis von seitlichem Abstand zur Länge im Nabenbereich ermöglicht, die dort vorliegenden hohen Anstellwinkelvariationen im Betrieb der Windenergieanlage mit verringerten Strömungsablösungen abzudecken. Die ungünstigen Gleitzahlen spielen dort für den Ertrag der Anlage eine untergeordnete Bedeutung. Weiter außen ist eine Absenkung der maximal zulässigen Anstellwinkel hinnehmbar, wie sie bei einer Erhöhung des Verhältnisses von seitlichem Abstand zur Länge bzw. Höhe eintreten, da dort auch die betrieblich bedingten Anstellwinkelvariationen abnehmen, dem dann aber durch den sukzessiv größer werdenden Einfluss von hohen Gleitzahlen auf den Ertrag Rechnung getragen wird.

Erfindungsgemäß ergibt sich die Variation der Geometrie der Verwirbelungselemente aus einem Verhältnis von seitlichem Abstand zu dem Winkel zu der Hauptströmungsrichtung des Rotorblattes, welches als eine Funktion der Distanz mit zunehmender Distanz zunimmt.

Die verschiedenen Formen der Variation der Geometrie können einzeln, unabhängig oder in Kombination miteinander vorgesehen sein.

Insbesondere kann das Verhältnis von seitlichem Abstand zur Länge und/oder von seitlichem Abstand zur Höhe der Verwirbelungselemente mit zunehmender Distanz zunehmen.

Vorzugsweise können die Verwirbelungselemente ein im Wesentlichen dreieckförmiges oder finnenförmiges Profil aufweisen.

Vorzugsweise kann die Länge und/oder die Höhe und/oder der Einbauwinkel der Verwirbelungselemente im Wesentlichen konstant sein. Die geometrische Variation kann dann vorzugsweise über die Variation der seitlichen Abstände zwischen benachbarten Verwirbelungselementen erfolgen. Damit ist es möglich, lediglich eine einzige Art von Verwirbelungselementen zu verwenden und dennoch die erfindungsgemäßen Vorteile zu erzielen. Ferner wird eine Reduktion von Fehlern und Falschmontagen auf der Baustelle durch Verwechseln der Verwirbelungselemente sowie Vorteile bei der Produktion erreicht, da lediglich ein Werkzeug zur Herstellung der Verwirbelungselemente, beispielsweise im Spritzgussverfahren, bereitzustellen ist. Besonders bevorzugt werden, wie erwähnt, die Verwirbelungselemente paarweise mit gemeinsamer Basis, beispielsweise einstückig als Spritzgussteil, bereitgestellt.

Besonders bevorzugt sind die Verwirbelungselemente, insbesondere paarweise, identisch, das heißt weisen über die Rotorblattlänge identische Länge, Höhe und Einbauwinkel auf. Auch mehrere Arten von Verwirbelungselementen sind vorstellbar, wobei der Abstand zwischen den Verwirbelungselementen mit steigendem Abstand von der Rotorblattwurzel zunimmt.

Vorzugsweise kann sich die Variation der Geometrie der Verwirbelungselemente aus einem Verhältnis von seitlichem Abstand zu einem Innenwinkel einer von einer Oberfläche des Rotorblattes entfernten Spitze des Verwirbelungselementes ergeben, welches als eine Funktion der Distanz bestimmbar ist. Der Innenwinkel an der Spitze lässt eine Aussage darüber zu, wie hoch, d.h. wie groß die Ausdehnung senkrecht zu der Oberfläche des Rotorblattes ist, das Verwirbelungselement im Verhältnis zu seiner Länge, d.h. der Ausdehnung in der Ebene der Oberfläche des Rotorblattes, ist, insbesondere bei einem im Wesentlichen dreieckförmigen oder finnenförmigen Profil.

Des Weiteren umfasst der zumindest eine Wirbelgenerator zumindest eine Grundplatte, auf der die Wirbelelemente paarweise angeordnet sind. Somit können für verschiedene Rotorabschnitte Wirbelgeneratoren hergestellt werden, deren Verwirbelungselemente an die einzelnen Rotorabschnitte angepasste Verhältnis von seitlichem Abstand zur Länge und/oder von seitlichem Abstand zur Höhe aufweisen.

Nicht beansprucht ist ein Wirbelgenerator für ein Rotorblatt einer Windenergieanlage, wobei der Wirbelgenerator eine Grundplatte mit einer vorderen Kante und einer hinteren Kante aufweist, wobei die vordere Kante in der vorgesehenen Orientierung auf dem Rotorblatt in Richtung der Vorderkante zeigt und wobei die hintere Kante in der vorgesehenen Orientierung auf dem Rotorblatt in Richtung der Hinterkante zeigt und dadurch eine Ausrichtung der Grundplatte von Rotorblattwurzel zu Rotorblattspitze festgelegt ist, wobei auf der Grundplatte mehrere Wirbelelemente angeordnet sind. In Abhängigkeit von einer jeweiligen Distanz der Anordnung der Verwirbelungselemente zur Rotorblattwurzel erfolgt eine Variation der Geometrie der Verwirbelungselemente auf der Grundplatte.

Die Verwirbelungselemente sind vorzugsweise paarweise angeordnet, wobei besonders bevorzugt mehrere Paare auf einer Grundplatte angeordnet sind.

Die Richtung der Grundplatte beziehungsweise der vorderen Kante und der hinteren Kante davon, ist nicht notwendigerweise vollständig parallel zu einer Längsrichtung des Rotorblattes. Beispielsweise kann die Grundplatte auch parallel zu der Hinterkante des Rotorblattes oder um einen bestimmten Winkel, beispielsweise bis zu 20 °, vorzugsweise weniger als 10 °, geneigt zu der Längsrichtung und/oder der Hinterkante ausgebildet sein.

Erfindungsgemäß wird zudem eine Windenergieanlage vorgeschlagen, die mit einem oder mehreren Rotorblättern gemäß wenigstens einer der oben beschriebenen Ausführungsformen ausgestattet ist. Insbesondere wird eine Windenergieanlage mit drei Rotorblättern vorgeschlagen, von denen jedes Rotorblatt gemäß einer der obigen Ausführungsformen ausgebildet ist.

Schließlich wird erfindungsgemäß zudem ein Verfahren zum Optimieren einer Windenergieanlage gemäß Anspruch 9 vorgeschlagen, wobei die Windenergieanlage ein Rotorblatt mit einer Saugseite und einer Druckseite für eine Windenergieanlage aufweist und wobei das Rotorblatt aufweist: eine Rotorblattwurzel eines Nabenbereichs zur Anbindung des Rotorblattes an eine Rotornabe, eine Rotorblattspitze, die an einer zur Rotorblattwurzel abgewandten Seite eines Spitzenbereichs angeordnet ist, zumindest einen Wirbelgenerator, der zwischen der Rotorblattwurzel und der Rotorblattspitze angeordnet ist. Der zumindest eine Wirbelgenerator umfasst in Längsrichtung des Rotorblattes nebeneinander angeordnete Verwirbelungselemente mit einer Länge und einer Höhe, die jeweils unter einem Winkel zu einer Hauptströmungsrichtung des Rotorblattes orientiert sind, wobei die Verwirbelungselemente einen seitlichen Abstand zueinander aufweisen. In Abhängigkeit von einer jeweiligen Distanz der Anordnung der Verwirbelungselemente zur Rotorblattwurzel erfolgt eine Variation der Geometrie der Verwirbelungselemente.

Weitere Beispiele und Vorteile werden nachfolgend mit Verweis auf die beigefügten Figuren beschrieben. Hierbei zeigen:
- Fig. 1: eine schematische Darstellung einer Windenergieanlage;
- Fig. 2: eine schematische Darstellung eines Rotorblattes;
- Fig. 3: eine schematische Darstellung eines Wirbelgenerators;
- Fig. 4: zwei schematische Verläufe eines Auftriebsbeiwertes über einen Anstellwinkel für ein Profil mit Wirbelgeneratoren;
- Fig. 5: zwei schematische Verläufe einer Gleitzahl über den Anstellwinkel für ein Profil mit Wirbelgeneratoren; und
- Fig. 6: eine schematische Darstellung eines Rotorblattes.

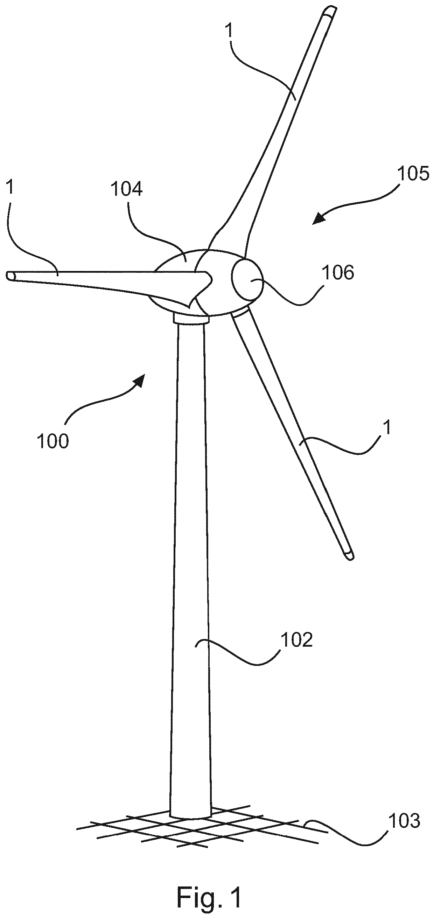

Fig. 1 zeigt eine Windenergieanlage 100 mit einem Turm 102, der auf einem Fundament 103 errichtet ist. Am oberen, dem Fundament 103 gegenüberliegenden Ende befindet sich eine Gondel 104 (Maschinenhaus) mit einem Rotor 105, der eine Rotornabe 106 und daran angebrachte Rotorblätter 1, die mit Verweis auf die weiteren Figuren genauer beschrieben werden, aufweist. Der Rotor 105 ist mit einem elektrischen Generator im Innern der Gondel 104 zur Wandlung von mechanischer Arbeit in elektrische Energie gekoppelt. Die Gondel 104 ist drehbar auf dem Turm 102 gelagert, dessen Fundament 103 die notwendige Standsicherheit gibt.

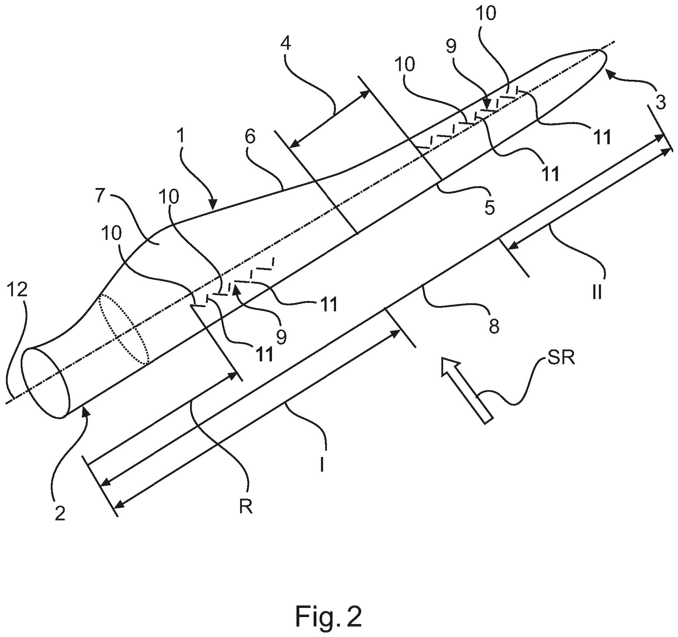

Fig. 2 zeigt eine schematische Darstellung eines Rotorblattes 1 einer Ausführungsform. Das Rotorblatt 1 weist an einem Ende die Rotorblattwurzel 2 und an dem dazu abgewandten Ende eine Rotorblattspitze 3 auf. An der Rotorblattwurzel 2 oder im Allgemeinen in dem Bereich nahe der Rotorblattwurzel 2 weist das Rotorblatt 1 eine große Profiltiefe auf. An der Rotorspitze 3 ist die Profiltiefe dagegen sehr viel kleiner. Die Profiltiefe nimmt, ausgehend von der Rotorblattwurzel 2, die auch als Profilwurzel 2 bezeichnet werden kann, in diesem Beispiel nach einem Anstieg im Blattinnenbereich, bis zu einem mittleren Bereich 4 deutlich ab. In dem mittleren Bereich 4 kann eine Trennstelle vorgesehen sein (hier nicht dargestellt). Vom mittleren Bereich 4 bis zur Rotorblattspitze 3 ist die Profiltiefe nahezu konstant, bzw. die Abnahme der Profiltiefe ist deutlich verringert. Das Rotorblatt 1 weist eine beispielsweise im Wesentlichen konvexe Saugseite 7, eine beispielsweise im Wesentlichen konkave Druckseite, eine Vorderkante 5 und eine Hinterkante 6 auf. Die Druckseite und/oder die Saugseite kann auch gerade bzw. mit einer anderen Form ausgeführt sein. Mit 8 ist eine Gesamtlänge des Rotorblattes 1 bezeichnet.

Weiterhin zeigt die Darstellung in Fig. 2 auf der Saugseite 7 des Rotorblattes 1 angeordnete Wirbelgeneratoren 9, die auch als Vortex-Generatoren bezeichnet werden. Die Wirbelgeneratoren 9 umfassen paarweise nebeneinander angeordnete Verwirbelungselemente 10, 11. Die jeweiligen Verwirbelungselemente 10, 11 erstrecken sich abschnittsweise zwischen der Vorderkante 5 und der Hinterkante 6 und sind jeweils unter einem Winkel zur Hauptströmungsrichtung SR des umströmten Rotorblattes 1 orientiert, so dass die Paare der Verwirbelungselemente 10, 11 einen sich von der Vorderkante 5 zu der Hinterkante 6 aufweitenden Verlauf aufweisen.

Die Verwirbelungselemente 10, 11 erstecken sich in diesem Beispiel senkrecht zur Oberfläche des Rotorblatts 1, wobei auch andere als rechte Winkel zwischen den Verwirbelungselementen 10, 11 und der Oberfläche des Rotorblattes 1 möglich sind. Während die Wirbelgeneratoren 9 in dem Beispiel auf der Saugseite 7 angeordnet gezeigt sind, sind alternativ oder zusätzlich auch Wirbelgeneratoren 9 auf der Druckseite möglich.

Die Verwirbelungselemente 10, 11 sind mit einer Distanz R zur Rotornabe bzw. der Rotorblattwurzel 2 angeordnet. Ein Nabenbereich I des Rotorblattes 1 erstreckt sich ausgehend von der Rotorblattwurzel 2 im Wesentlichen bis zum mittleren Bereich 4. Ein Spitzenbereich II des Rotorblattes 1 erstreckt sich im Wesentlichen von dem mittleren Bereich 4 bis zur Rotorblattspitze 3.

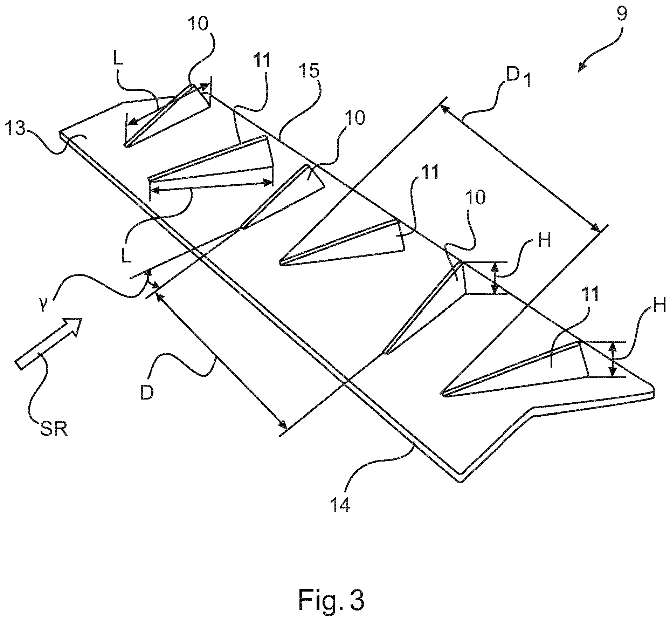

Fig. 3 zeigt eine schematische Darstellung einer Ausführungsform eines Wirbelgenerators 9 in perspektivischer Ansicht. Der Wirbelgenerator 9 kann zumindest eine Grundplatte 13 aufweisen, die der Anbringung des Wirbelgenerators 9 auf der Oberfläche des Rotorblattes 1 dient. Die Grundplatte 13 weist eine vordere Kante 14 und eine hintere Kante 15 auf. Zwischen der vorderen Kante 14, die in auf dem Rotorblatt 1 montierter Position der Vorderkante 5 zugewandt ist, und der hinteren Kante 15, der Hinterkante 6 zugewandt ist, verlaufen die jeweiligen Verwirbelungselemente 10, 11, die eine in diesem Beispiel im Wesentlichen dreieckförmige oder finnenförmige Kontur aufweisen.

Die Verwirbelungselemente 10, 11 weisen jeweils eine Höhe H, wobei der Höhenverlauf in Richtung der hinteren Kante 15 der Grundplatte 13 bis zu einem Höchstwert zunimmt, sowie eine Länge L auf, welche die Erstreckung des jeweiligen Verwirbelungselementes 10, 11 zwischen der Vorderkante 14 und der Hinterkante 15 bzw. in der Rotorblattebene bezeichnet.

Die jeweils paarweise nebeneinander angeordneten Verwirbelungselemente 10, 11 sind unter einem Winkel zu der Hauptströmungsrichtung SR geneigt angeordnet, wobei sich ein ausgehend von der vorderen Kante 14 zur hinteren Kante 15 ein aufweitender Verlauf der benachbarten Verwirbelungselemente 10, 11 einstellt. Zwei nebeneinander angeordnete Verwirbelungselemente 10, 11 haben eine im Wesentlichen symmetrische Ausrichtung gegenüber der Hauptströmungsrichtung SR, das heißt, dass ein Verwirbelungselement 10 der paarweise angeordneten Verwirbelungselemente 10, 11 in Längsrichtung des Rotorblattes nach außen zeigt und ein weiteres Verwirbelungselement 11 in Längsrichtung des Rotorblattes nach innen zeigt. Ein lateraler Abstand zwischen zwei Spitzen zweier im Wesentlichen in gleicher Richtung ausgerichteter Verwirbelungselemente 10 bzw. 11 ist mit einem Bezugseichen D bzw. D₁ bezeichnet.

Wirbelgeneratoren bilden eine passive Maßnahme zur Strömungsbeeinflussung, indem im Allgemeinen die in gleichen lateralen Abständen angeordneten Verwirbelungselemente der Wirbelgeneratoren eine Verwirbelung der Grenzschichtströmung hervorrufen, da die Verwirbelungselemente unter einem Winkel zur Hauptströmungsrichtung geneigt angeordnet sind. Die Wirbelgeneratoren verwirbeln die wandnahe Strömung an dem Rotorblatt, in dessen Folge sich der Impulsaustausch zwischen wandnahen und wandfernen Strömungsschichten stark erhöht und die Strömungsgeschwindigkeiten in der wandnahen Grenzschicht zunehmen. Durch die erhöhten wandnahen Strömungsgeschwindigkeiten ist die Strömung in der Lage, über eine längere Laufstrecke auf der Oberfläche des Rotorblatts Druckanstiege zu überwinden. Somit erhöht sich die Resistenz gegen Strömungsablösungen.

Eine Windenergieanlage operiert nicht an einem stationären Betriebspunkt, sondern ist ständig unterschiedlichen Einflüssen unterworfen, welche dazu führen, dass sich der aerodynamische Betriebspunkt an dem Rotorblatt 1 fortlaufend ändert. Anstellwinkel α, die über den Blattradius am Rotorblatt 1 vorliegen, variieren im Betrieb der Anlage ununterbrochen. Insbesondere haben Parameter wie Anströmturbulenz, horizontale und vertikale Scherung der Bodengrenzschicht und die Luftdichte, um nur die wichtigsten Parameter zu nennen, Einfluss auf die Anstellwinkelverteilung am Rotorblatt 1. So haben kleinskalige Anströmturbulenzen oder Änderungen der Luftdichte eine Absenkung der Schnelllaufdrehzahl zur Folge, was dazu führt, dass der Anstellwinkel α im Innenbereich, d.h. vom Nabenbereich I bis zum Mittenbereich 4, des Rotorblatts 1 stärker variiert als im Außenbereich, d.h. vom Mittenbereich 4 bis zum Spitzenbereich II des Rotorblatts 1. Daher werden im Innenbereich des Rotorblatts 1 größere Reserven für den Anstellwinkel α im Betrieb vorgesehen als im Außenbereich des Rotorblatts 1. Entsprechend kommen insbesondere im Innenbereich des Rotorblatts 1 die Wirbelgeneratoren 9 zum Einsatz. Die Wirbelgeneratoren 9 verlängern durch die Erhöhung der Resistenz gegen Strömungsablösungen den Nutzungsbereich des Profils des Rotorblattes 1, den sogenannten linearen Ast, in dem ein proportionaler Zusammenhang zwischen Auftrieb und Anstellwinkel besteht.

Des Weiteren nimmt der Einfluss von Gleitzahl ε bzw. Widerstandsbeiwert cw auf die Leistung von der Rotorblattwurzel 2 zur Rotorspitze 3 des Rotorblattes 1 hin immer weiter zu. Mit zunehmendem Abstand von der Rotorblattwurzel 2 ist es für die Leistung und den Ertrag der Anlage wesentlich, niedrige Widerstandsbeiwerte cw bzw. hohe Gleitzahlen ε zu erreichen.

Für einen sicheren Betrieb einer Windenergieanlage müssen im Innenbereich des Rotorblatts 1 hohe Anstellwinkelschwankungen abgefangen werden, was durch Rotorblätter 1 mit den darauf angeordneten Wirbelgeneratoren 9 gewährleistet werden kann. Der Nachteil reduzierter Gleitzahlen ε bei der Verwendung von Wirbelgeneratoren 9 ist im Innenbereich des Rotorblattes 1 hinnehmbar, da der Einfluss der Gleitzahl ε auf den Anlagenertrag im Innenbereich des Rotorblattes 1 vernachlässigbar ist. Je weiter außen man sich am Rotorblatt 1 befindet, desto kleiner werden die Anstellwinkelbereiche, die abgedeckt werden müssen, und desto größer wird der Einfluss der Gleitzahl ε auf den Ertrag der Windenergieanlage. Um diesen Umständen Rechnung zu tragen, erfolgt die Dimensionierung der Verwirbelungselemente 10, 11 in Abhängigkeit vom jeweiligen Abstand R der Anordnung der Verwirbelungselemente 10, 11 zu der Rotorblattwurzel 2. D.h., dass mit zunehmender Distanz R zu der Rotornabe bzw. der Rotorblattwurzel 2 werden die geometrischen Abmessungen Höhe H, Länge L und/oder lateraler Abstand D der Verwirbelungselemente 10, 11 verändert.

Dabei wird ein Verhältnis V von lateralem Abstand D zur Höhe H bzw. von lateralem Abstand D zur Länge L variiert, wobei das Verhältnis V von lateralem Abstand D zur Höhe H bzw. von lateralem Abstand D zur Länge L mit zunehmender Distanz R zunimmt. Im Rotornabenbereich I wird ein kleines Verhältnis V von lateralem Abstand D zur Höhe H bzw. von lateralem Abstand D zur Länge L gewählt, so dass die dort vorliegenden hohen Anstellwinkelvariationen im Betrieb der Windenergieanlage ohne Strömungsablösungen abgedeckt werden können. Hingegen ist mit zunehmender Distanz R eine Absenkung der maximal zulässigen Anstellwinkel hinnehmbar, wie es bei einer Erhöhung des Verhältnisses V von lateralem Abstand D zur Höhe H bzw. von lateralem Abstand D zur Länge L eintritt. Da mit zunehmender Distanz R zur Rotornabe auch die betrieblich bedingten Anstellwinkelvariationen abnehmen, kann dem dann aber durch den sukzessiv größer werdenden Einfluss von hohen Gleitzahlen auf den Ertrag Rechnung getragen werden.

In einer alternativen Ausführung wird ebenfalls oder alternativ ein Winkel γ, unter dem die Verwirbelungselemente 10, 11 bezüglich der Hauptströmungsrichtung SR liegen, mit zunehmender Distanz R zu der Rotornabe bzw. der Rotorblattwurzel 2 variiert. Insbesondere wird ein niedrigerer Winkel bezüglich der Hauptströmungsrichtung SR mit zunehmender Distanz R vorgesehen.

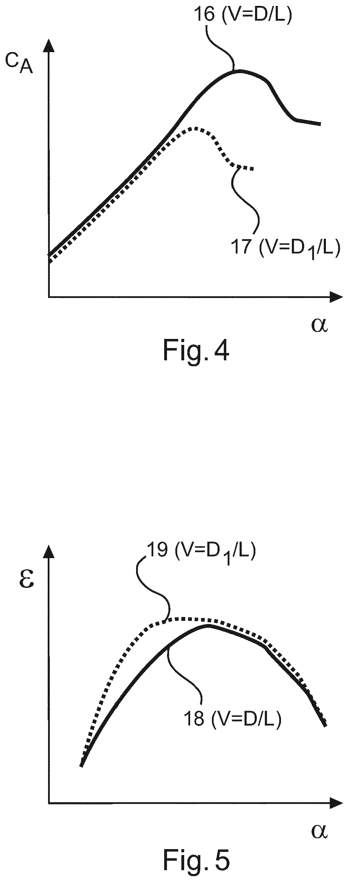

In den Fig. 4 und 5 sind jeweils zwei Verläufe 16, 17 bzw. 18, 19 von Auftriebsbeiwert c_{A} und Gleitzahl ε über den Anstellwinkel α für ein mit Wirbelgeneratoren 9 versehenes Rotorblatt 1 für jeweils zwei unterschiedliche Verhältnisse V von lateralem Abstand D zur Höhe H dargestellt. Die Verläufe 16 bzw. 18 wurde für ein erstes Verhältnis V von lateralem Abstand D zur Höhe H bestimmt, während die Verläufe 17 bzw. 19 für ein zweites Verhältnis V von lateralem Abstand D₁ zur Höhe H bestimmt wurden, wobei der laterale Abstand D₁ größer als der laterale Abstand D ist.

Aus den in den Fig. 4 gegenübergestellten Verläufen 16 und 17 ist ersichtlich, dass der maximale Auftriebsbeiwert c_{A} mit größer werdendem Verhältnis V von lateralem Abstand D zur Höhe H abnimmt. Hingegen zeigen die in Fig. 5 gegenübergestellten Verläufe 18 und 19, dass die maximal erreichbare Gleitzahl ε in einem weiten Anstellwinkelbereich zunimmt. Wird also das Verhältnis V von lateralem Abstand D zur Höhe H bzw. H bzw. lateralem Abstand D zur Länge L der Verwirbelungselemente 10, 11 im Nabenbereich I des Rotorblattes 1 klein gewählt, sind in diesem Profilabschnitt des Rotorblattes 1 hohe maximale Anstellwinkel α zulässig, was jedoch mit einer verringerten Gleitzahl ε einhergeht. Wird das Verhältnis von lateralem Abstand D zur Höhe H bzw. H bzw. lateralem Abstand D zur Länge L zur Blattspitze 3 hin vergrößert, dann verringern sich die maximal erreichbaren Anstellwinkel α zugunsten verbesserter Gleitzahlen ε.

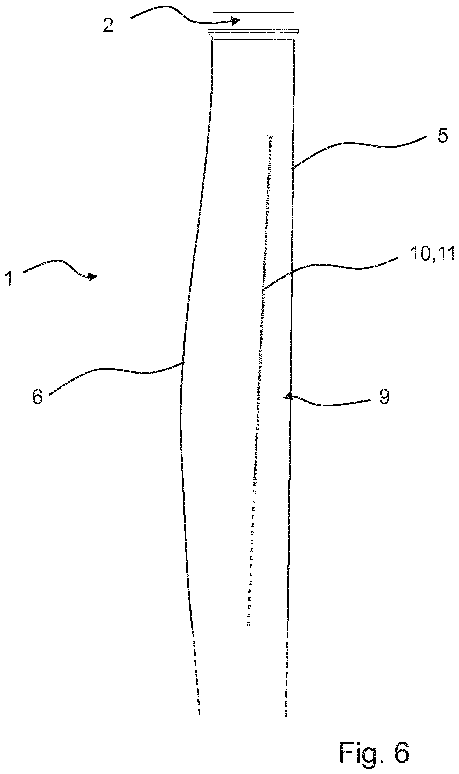

Fig. 6 zeigt schematisch ein Rotorblatt 1, bei dem der Abstand zwischen Paaren von Verwirbelungselementen 10, 11 mit steigendem Abstand von der Rotorblattwurzel 2 zunimmt. Über die gesamte Strecke in Richtung der Rotorblattlängsrichtung sind die Verwirbelungselemente 10, 11 im Wesentlichen identisch, d.h. unter dem gleichen Winkel montiert und weisen identische Höhen H und Längen L auf.

Durch die Verwendung lediglich einer Art von insbesondere paarweise bereitgestellten Verwirbelungselementen 10, 11 lässt sich die Montage, beispielsweise auf einer Baustelle, vereinfachen, da die Gefahr von Verwechslungen und Falschmontage der Verwirbelungselemente 10, 11 reduziert ist. Auch sind damit produktionstechnische Vorteile verbunden, da lediglich ein Produktionswerkzeug, beispielsweise bei Fertigung in Spritzgusstechnik, erforderlich ist.

Darüber hinaus kann die Ausführung der Fig. 6 mit sämtlichen anderen der beschriebenen geometrischen Variationen unter Erreichung der damit verbundenen Vorteile kombiniert werden.

Eine auf die Windenergieanlage treffende Windböe, das heißt eine Geschwindigkeitsänderung in der Anströmung, verursacht am in Betrieb befindlichen Rotorblatt 1 eine Änderung des effektiven Anstellwinkels. Der effektive Anstellwinkel ergibt sich aus vektorieller Addition von Umfangsgeschwindigkeit und anströmender Windgeschwindigkeit. Das Verhältnis aus Umfangsgeschwindigkeit zu Windgeschwindigkeit bestimmt also, ob eine Geschwindigkeitsänderung in der Anströmung eine große oder eine kleine Änderung des effektiven Anstellwinkels nach sich zieht.

An der Rotorblattwurzel 2 hat eine Böe eine große Änderung des effektiven Anstellwinkels zur Folge, da die Anströmgeschwindigkeit im Verhältnis zur Umfangsgeschwindigkeit groß ist. Am Außenblatt, in der Nähe der Rotorspitze 3, wo die Umfangsgeschwindigkeit um einige Größenordnungen höher ist und die Anströmgeschwindigkeit im Verhältnis entsprechend deutlich kleiner, führt die gleiche Windböe nur zu einer geringen Änderung des effektiven Anstellwinkels.

Aus diesem Grund ist es erforderlich, am Innenblatt Wirbelgeneratoren 9 derart auszulegen, dass sie eine möglichst große Anstellwinkelreserve zur Folge haben. Dies kann auch durch eine gewünschte, möglichst lange ablösefreie Profilpolare ausgedrückt werden und ist bei einem relativ geringen Abstand der Wirbelgeneratoren 9 der Fall. Der dadurch entstehende zusätzliche Widerstand und die daraus resultierende reduzierte Gleitleistung fallen bei den geringen Umfangsgeschwindigkeiten für die Leistung der Windenergieanlage kaum ins Gewicht.

Am Außenblatt in der Nähe der Rotorspitze 3 sind aus den dargelegten Gründen geringere zusätzliche Anstellwinkelreserven erforderlich. Außerdem würde ein zu hoher Widerstand am Rotorblatt 1 bei hohen Umfangsgeschwindigkeiten deutlich negativere Auswirkungen auf die Rotorleistung haben als an der Rotorblattwurzel 2. Daher sind in diesem Bereich vorzugsweise größer werdende Abstände zwischen den Wirbelgeneratoren 9 vorgesehen, die durch geringeren Widerstand eine bessere Gleitleistung und eine etwas geringere Anstellwinkelerweiterung bis zum Stall zur Folge haben.

Alternativ oder zusätzlich ist auch die Verwendung von kleineren Wirbelgeneratoren 9 nach außen hin sinnvoll, besonders bevorzugt in Kombination mit einer Vergrößerung des Abstandes nach außen, selbst wenn die Wirbelgeneratoren 9 in der Größe nach außen hin reduziert werden. Besonders bevorzugt werden die Wirbelgeneratoren 9 aus 3 bis 5 verfügbaren unterschiedlichen Größen von Wirbelgeneratoren 9 ausgewählt, so dass die Komplexität beispielsweise bei Lagerhaltung und Montage überschaubar bleibt.

Hinsichtlich des erzeugten Schalls gilt, dass umso mehr Schall entsteht, je mehr Wirbelgeneratoren 9 im Wind stehen. Ferner gilt, je höher die Windgeschwindigkeit, desto mehr Schall erzeugt jeder einzelne der Wirbelgeneratoren 9. Eine im Vergleich zu der Rotorblattwurzel 2 niedrigere Dichte an Wirbelgeneratoren 9 nach außen hin ist also auch aus akustischer Sicht zu bevorzogen.

Es gilt für die Blattauslegung eines Rotorblattes 1 auch das Ziel, den Induktionsfaktor über den Radius auch auf dem leistungsoptimalen Wert von 1/3 zu halten. Bedingt durch die geringe Geschwindigkeit ist dies im Bereich der Rotorblattwurzel 2 nur durch Erhöhung der Profiltiefe, was aus Transportgründen nur bedingt möglich ist, oder durch Erhöhung der Auftriebsbeiwerte möglich. Daher ist der leistungsoptimale Rotor mit begrenzter maximaler Tiefe an der Rotorblattwurzel 2 immer so auszulegen, dass im Wurzelbereich höchstmögliche Auftriebsbeiwerte erzielt werden.

## Patentansprüche

1. Rotorblatt (1) mit einer Saugseite und einer Druckseite für eine Windenergieanlage, aufweisend:
- eine Rotorblattwurzel (2) eines Nabenbereichs (I) zur Anbindung des Rotorblattes (1) an eine Rotornabe,
- eine Rotorblattspitze (3), die an einer zur Rotorblattwurzel (2) abgewandten Seite eines Spitzenbereichs (II) angeordnet ist,
- zumindest einen Wirbelgenerator (9), der zwischen der Rotorblattwurzel (2) und der Rotorblattspitze (3) angeordnet ist,
wobei der zumindest eine Wirbelgenerator (9) in Längsrichtung des Rotorblattes nebeneinander angeordnete Verwirbelungselemente (10, 11) mit einer Länge (L) und einer Höhe (H) umfasst, die jeweils unter einem Winkel zu einer Hauptströmungsrichtung (SR) des Rotorblattes (1) orientiert sind, wobei die Verwirbelungselemente (10, 11) in Längsrichtung des Rotorblattes einen seitlichen Abstand (D, D₁) zueinander aufweisen,
wobei der Wirbelgenerator (9) eine Grundplatte (13) umfasst, auf der die Verwirbelungselemente (10, 11) paarweise mit im Wesentlichen entgegengesetzt ausgebildetem Winkel zu der Hauptströmungsrichtung (SR) des Rotorblattes (1) angeordnet sind, wobei der seitliche Abstand (D, D₁) zwischen nebeneinander angeordneten Verwirbelungselementen (10, 11) mit im Wesentlichen gleichem Winkel bestimmt wird,
wobei
in Abhängigkeit von einer jeweiligen Distanz (R) der Anordnung der Verwirbelungselemente (10, 11) zur Rotorblattwurzel (2) eine Variation der Geometrie der Verwirbelungselemente (10, 11) erfolgt, **dadurch gekennzeichnet, dass** sich die Variation der Geometrie der Verwirbelungselemente (10, 11) aus einem Verhältnis (V) von dem seitlichen Abstand (D, D₁) zu dem Winkel zu der Hauptströmungsrichtung (SR) des Rotorblattes (1) ergibt, welches als eine Funktion der Distanz (R) mit zunehmender Distanz (R) zunimmt.

2. Rotorblatt (1) nach Anspruch 1, **dadurch gekennzeichnet, dass** sich die Variation der Geometrie der Verwirbelungselemente (10, 11) aus einem Verhältnis (V) von dem seitlichen Abstand (D, D₁) zur Länge (L) ergibt, welches als eine Funktion der Distanz (R) bestimmbar ist.

3. Rotorblatt (1) nach einem der vorstehenden Ansprüche, **dadurch gekennzeichnet, dass** sich die Variation der Geometrie der Verwirbelungselemente (10, 11) aus einem Verhältnis (V) von dem seitlichen Abstand (D, D₁) zur Höhe (H) ergibt, welches als eine Funktion der Distanz (R) bestimmbar ist.

4. Rotorblatt (1) nach einem der Ansprüche 2 und 3, **dadurch gekennzeichnet, dass** das Verhältnis von dem seitlichen Abstand (D, D₁) zur Länge (L) und/oder von dem seitlichen Abstand (D, D₁) zur Höhe (H) mit zunehmender Distanz (R) zunimmt.

5. Rotorblatt (1) nach Anspruch 4, **dadurch gekennzeichnet, dass** die Länge (L) und/oder die Höhe (H) der Verwirbelungselemente (10, 11) im Wesentlichen konstant ist.

6. Rotorblatt (1) nach einem der vorstehenden Ansprüche, **dadurch gekennzeichnet, dass** die Verwirbelungselemente (10, 11) ein im Wesentlichen dreieckförmiges oder finnenförmiges Profil aufweisen.

7. Rotorblatt (1) nach einem der vorstehenden Ansprüche, **dadurch gekennzeichnet, dass** sich die Variation der Geometrie der Verwirbelungselemente (10, 11) aus einem Verhältnis (V) von dem seitlichen Abstand (D, D₁) zu einem Innenwinkel einer von einer Oberfläche des Rotorblattes (1) entfernten Spitze des Verwirbelungselementes (10, 11) ergibt, welches als eine Funktion der Distanz (R) bestimmbar ist.

8. Windenergieanlage mit einem Rotor, wobei der Rotor wenigstens ein Rotorblatt (1) nach einem der Ansprüche 1 bis 7 aufweist.

9. Verfahren zum Optimieren einer Windenergieanlage, wobei die Windenergieanlage ein Rotorblatt (1) mit einer Saugseite und einer Druckseite für eine Windenergieanlage aufweist, wobei das Rotorblatt aufweist:
- eine Rotorblattwurzel (2) eines Nabenbereichs (I) zur Anbindung des Rotorblattes (1) an eine Rotornabe,
- eine Rotorblattspitze (3), die an einer zur Rotorblattwurzel (2) abgewandten Seite eines Spitzenbereichs (II) angeordnet ist,
- zumindest einen Wirbelgenerator (9), der zwischen der Rotorblattwurzel (2) und der Rotorblattspitze (3) angeordnet ist,
wobei der zumindest eine Wirbelgenerator (9) in Längsrichtung des Rotorblattes nebeneinander angeordnete Verwirbelungselemente (10, 11) mit einer Länge (L) und einer Höhe (H) umfasst, die jeweils unter einem Winkel zu einer Hauptströmungsrichtung (SR) des Rotorblattes (1) orientiert sind,
wobei die Verwirbelungselemente (10, 11) einen seitlichen Abstand (D, D₁) zueinander aufweisen, wobei der Wirbelgenerator (9) eine Grundplatte (13) umfasst, auf der die Verwirbelungselemente (10, 11) paarweise mit im Wesentlichen entgegengesetzt ausgebildetem Winkel zu der Hauptströmungsrichtung (SR) des Rotorblattes (1) angeordnet sind, wobei der seitliche Abstand (D, D₁) zwischen nebeneinander angeordneten Verwirbelungselementen (10, 11) mit im Wesentlichen gleichem Winkel bestimmt wird,
wobei
in Abhängigkeit von einer jeweiligen Distanz (R) der Anordnung der Verwirbelungselemente (10, 11) zur Rotorblattwurzel (2) eine Variation der Geometrie der Verwirbelungselemente (10, 11) erfolgt, **dadurch gekennzeichnet, dass** der Schritt des Variierens der Geometrie der Verwirbelungselemente (10, 11) aus einem Verhältnis (V) von dem seitlichen Abstand (D, D1) zu dem Winkel zu der Hauptströmungsrichtung (SR) des Rotorblattes (1) ergibt, welches als eine Funktion der Distanz (R) mit zunehmender Distanz (R) zunimmt.

## Claims

1. A rotor blade (1), with a suction side and a pressure side, for a wind turbine, having:
- a rotor blade root (2) of a hub region (I) for attaching the rotor blade (1) to a rotor hub,
- a rotor blade tip (3), which is arranged on a side, facing away from the rotor blade root (2), of a tip region (II),
- at least one vortex generator (9), which is arranged between the rotor blade root (2) and the rotor blade tip (3),
wherein the at least one vortex generator (9) comprises swirl elements (10, 11) with a length (L) and a height (H), which are arranged one next to the other in a longitudinal direction of the rotor blade and are in each case oriented at an angle to a main flow direction (SR) of the rotor blade (1), wherein, in the longitudinal direction of the rotor blade, the swirl elements (10, 11) have a lateral spacing (D, D1) to one another,
wherein the vortex generator (9) comprises at least one base plate (13), on which the swirl elements (10, 11) are, in pairs, oriented at an angle to the main flow direction (SR) of the rotor blade (1) that is in each case formed substantially in the opposite direction, wherein the lateral spacing (D, D1) is determined between swirl elements (10, 11) arranged one next to the other at substantially the same angle wherein
a variation in the geometry of the swirl elements (10, 11) is realized in a manner dependent on a respective distance (R) between the arrangement of the swirl elements (10, 11) and the rotor blade root (2), **characterized in that** the variation in the geometry of the swirl elements (10, 11) stems from a ratio (V) of the lateral spacing (D, D1) to the angle to the main flow direction (SR) of the rotor blade (1), which ratio is able to be determined as a function of the distance (R) that increases with increasing distance (R).

2. The rotor blade (1) as claimed in claim 1, **characterized in that** the variation in the geometry of the swirl elements (10, 11) stems from a ratio (V) of the lateral spacing (D, D1) to the length (L), which ratio is able to be determined as a function of the distance (R).

3. The rotor blade (1) as claimed in one of the preceding claims, **characterized in that** the variation in the geometry of the swirl elements (10, 11) stems from a ratio (V) of the lateral spacing (D, D1) to the height (H), which ratio is able to be determined as a function of the distance (R).

4. The rotor blade (1) as claimed in one of claims 2 and 3, **characterized in that** the ratio of the lateral spacing (D, D1) to the length (L) and/or of the lateral spacing (D, D1) to the height (H) increases with increasing distance (R).

5. The rotor blade (1) as claimed in claim 4, **characterized in that** the length (L) and/or the height (H) of the swirl elements (10, 11) are/is substantially constant.

6. The rotor blade (1) as claimed in one of the preceding claims, **characterized in that** the swirl elements (10, 11) have a substantially triangular or fin-like profile.

7. The rotor blade (1) as claimed in one of the preceding claims, **characterized in that** the variation in the geometry of the swirl elements (10, 11) stems from a ratio (V) of the lateral spacing (D, D1) to an internal angle at a tip, at a distance from a surface of the rotor blade (1), of the swirl element (10, 11), which ratio is able to be determined as a function of the distance (R).

8. A wind turbine having a rotor, wherein the rotor has at least one rotor blade (1) as claimed in one of claims 1 to 7.

9. A method for optimizing a wind turbine, wherein the wind turbine has a rotor blade (1), with a suction side and a pressure side, for a wind turbine, wherein the rotor blade has:
- a rotor blade root (2) of a hub region (I) for attaching the rotor blade (1) to a rotor hub,
- a rotor blade tip (3), which is arranged on a side, facing away from the rotor blade root (2), of a tip region (II),
- at least one vortex generator (9), which is arranged between the rotor blade root (2) and the rotor blade tip (3),
wherein the at least one vortex generator (9) comprises swirl elements (10, 11) with a length (L) and a height (H), which are arranged one next to the other in a longitudinal direction of the rotor blade and are in each case oriented at an angle to a main flow direction (SR) of the rotor blade (1),
wherein the swirl elements (10, 11) have a lateral spacing (D, D1) to one another, wherein the vortex generator (9) comprises at least one base plate (13), on which the swirl elements (10, 11) are, in pairs, oriented at an angle to the main flow direction (SR) of the rotor blade (1) that is in each case formed substantially in the opposite direction, wherein the lateral spacing (D, D1) is determined between swirl elements (10, 11) arranged one next to the other at substantially the same angle wherein
a variation in the geometry of the swirl elements (10, 11) is realized in a manner dependent on a respective distance (R) between the arrangement of the swirl elements (10, 11) and the rotor blade root (2), **characterized in that** the variation in the geometry of the swirl elements (10, 11) stems from a ratio (V) of the lateral spacing (D, D1) to the angle to the main flow direction (SR) of the rotor blade (1), which ratio is able to be determined as a function of the distance (R) that increases with increasing distance (R).

## Revendications

1. Pale de rotor (1) avec un extrados et un intrados pour une éolienne présentant :
- un pied de pale de rotor (2) d'une zone de moyeu (I) pour la liaison de la pale de rotor (1) avec un moyeu de rotor,
- un bout de pale de rotor (3) qui est agencé au niveau d'un côté d'une zone de bout (II) éloigné du pied de pale de rotor (2),
- au moins un générateur de tourbillon (9) qui est agencé entre le pied de pale de rotor (2) et le bout de pale de rotor (3),
dans laquelle l'au moins un générateur de tourbillon (9) comprend des éléments de tourbillonnement (10, 11) agencés l'un à côté de l'autre dans le sens longitudinal de la pale de rotor avec une longueur (L) et une hauteur (H) qui sont orientés respectivement selon un angle à un sens d'écoulement principal (SR) de la pale de rotor (1), dans laquelle les éléments de tourbillonnement (10, 11) présentent, dans le sens longitudinal de la pale de rotor, une distance (D, D₁) latérale l'un par rapport à l'autre,
dans laquelle le générateur de tourbillon (9) comprend une plaque de base (13), sur laquelle les éléments de tourbillonnement (10, 11) sont agencés par paires avec un angle réalisé sensiblement à l'opposé, par rapport au sens d'écoulement principal (SR), de la pale de rotor (1), dans laquelle la distance (D, D₁) latérale entre des éléments de tourbillonnement (10, 11) agencés l'un à côté de l'autre est déterminée avec un angle sensiblement identique,
dans laquelle
une variation de la géométrie des éléments de tourbillonnement (10, 11) est effectuée en fonction d'une distance (R) respective de l'agencement des éléments de tourbillonnement (10, 11) par rapport au pied de la pale de rotor (2), **caractérisée en ce que** la variation de la géométrie des éléments de tourbillonnement (10, 11) résulte d'un rapport (V), entre la distance (D, D₁) latérale et l'angle, par rapport au sens d'écoulement principal (SR) de la pale de rotor (1), qui augmente en fonction de la distance (R) à mesure que la distance (R) augmente.

2. Pale de rotor (1) selon la revendication 1, **caractérisée en ce que** la variation de la géométrie des éléments de tourbillonnement (10, 11) résulte d'un rapport (V) entre la distance (D, D₁) latérale et la longueur (L) qui peut être déterminé en fonction de la distance (R).

3. Pale de rotor (1) selon l'une quelconque des revendications précédentes, **caractérisée en ce que** la variation de la géométrie des éléments de tourbillonnement (10, 11) résulte d'un rapport (V) entre la distance (D, D₁) latérale et la hauteur (H) qui peut être déterminé en fonction de la distance (R).

4. Pale de rotor (1) selon l'une quelconque des revendications 2 et 3, **caractérisée en ce que** le rapport, entre la distance (D, D₁) latérale et la longueur (L) et/ou la distance (D, D₁) latérale et la hauteur (H), augmente à mesure que la distance (R) augmente.

5. Pale de rotor (1) selon la revendication 4, **caractérisée en ce que** la longueur (L) et/ou la hauteur (H) des éléments de tourbillonnement (10, 11) est sensiblement constante.

6. Pale de rotor (1) selon l'une quelconque des revendications précédentes, **caractérisée en ce que** les éléments de tourbillonnement (10, 11) présentent un profil sensiblement en triangle ou en ailette.

7. Pale de rotor (1) selon l'une quelconque des revendications précédentes, **caractérisée en ce que** la variation de la géométrie des éléments de tourbillonnement (10, 11) résulte d'un rapport (V) entre la distance (D, D₁) latérale et un angle intérieur d'un bout de l'élément de tourbillonnement (10, 11) éloigné d'une surface de la pale de rotor (1), rapport qui peut être déterminé en fonction de la distance (R).

8. Eolienne avec un rotor, dans laquelle le rotor présente au moins une pale de rotor (1) selon l'une quelconque des revendications 1 à 7.

9. Procédé d'optimisation d'une éolienne, dans lequel l'éolienne présente une pale de rotor (1) avec un extrados et un intrados pour une éolienne, dans lequel la pale de rotor présente :
- un pied de pale de rotor (2) d'une zone de moyeu (I) pour la liaison de la pale de rotor (1) avec un moyeu de rotor,
- un bout de pale de rotor (3) qui est agencé au niveau d'un côté éloigné du pied de pale de rotor (2) d'une zone de bout (II),
- au moins un générateur de tourbillon (9) qui est agencé entre le pied de pale de rotor (2) et le bout de pale de rotor (3),
dans lequel l'au moins un générateur de tourbillon (9) comprend des éléments de tourbillonnement (10, 11) agencés l'un à côté de l'autre dans le sens longitudinal de la pale de rotor avec une longueur (L) et une hauteur (H) qui sont orientés respectivement selon un angle à un sens d'écoulement principal (SR) de la pale de rotor (1),
dans lequel les éléments de tourbillonnement (10, 11) présentent une distance (D, D1) latérale l'un par rapport à l'autre, dans lequel le générateur de tourbillon (9) comprend une plaque de base (13), sur laquelle les éléments de tourbillonnement (10, 11) sont agencés par paires avec un angle réalisé sensiblement à l'opposé, par rapport au sens d'écoulement principal (SR), de la pale de rotor (1), dans lequel la distance (D, D₁) latérale entre des éléments de tourbillonnement (10, 11) agencés l'un à côté de l'autre est déterminée avec un angle sensiblement identique,
dans lequel
une variation de la géométrie des éléments de tourbillonnement (10, 11) est effectuée en fonction d'une distance (R) respective de l'agencement des éléments de tourbillonnement (10, 11) par rapport au pied de la pale de rotor (2), **caractérisé en ce que** l'étape de variation de la géométrie des éléments de tourbillonnement (10, 11) résulte d'un rapport (V) entre la distance (D, D₁) latérale et l'angle, par rapport au sens d'écoulement principal (SR) de la pale de rotor (1), qui augmente en fonction de la distance (R) à mesure que la distance (R) augmente.
